# EUROPEAN PATENT APPLICATION

(11) **EP 2 292 309 A1**
(43) Date of publication of application: **09.03.2011**
(21) Application number: 09167440.8
(22) Date of filing: 07.08.2009
(51) Int. Cl.: B01D 39/16, B01D 46/52, D01F 6/90

(54) **Nanofibers with improved chemical and physical stability and web containing nanofibers**

(71) Applicant: Ahlstrom Corporation, 00180 Helsinki (FI)
(72) Inventor: Fantini, Diego, 38780, PONT-EVÊQUE (FR); Chavan, Santosh, 38780, PONT-EVÊQUE (FR); Cravero, Tiziana, 10076, NOLE (IT)
(74) Representative: Denjean, Eric

(57) **Abstract**

A non woven web containing water insoluble nanofibers and/or micro fibers obtained by an electrospinning process using water based solution containing at least two components, a first component having carboxylic acid and/or anhydride functionalities and a second component having primary and/or secondary amino functionalities, the web being cured upon a heat treatment. Application: filtration and separation

## Description

The invention concerns the production of nanofibers from aqueous polymer solutions with improved chemical and physical stability for the manufacture of a web containing nanofibers. The object of the invention is also the web which is obtained according to the process and its use for example in filtration and separation applications.

A large number of synthetic and fabrication methods have already been demonstrated for generating one-dimensional nanostructures in the form of fibers ^{[1-3]}. Among these methods, electrospinning seems to provide the simplest approach to obtain nanofibers exceptionally long in length, uniform in diameter and diversified in comparison ^{[4-5]}. Unlike others methods for generating one-dimensional nanostructures, the formation of a thin fiber via electrospinning is based on the uniaxial stretching (or elongation) of a viscoelastic jet derived from a polymer solution. This technique is similar to the commercial processes for drawing microscale fibers except for the use of electrostatic repulsions between surface charges (rather than a mechanical or shear force) to continuously reduce the diameter of a viscoelastic jet ^{[6-7]}. Like mechanical drawing, electrospinning is also a continuous process and well known for high-volume production.

The first patent that described the operation of electrospinning appeared in 1934, when Formalas disclosed an apparatus for producing polymer filaments by taking advantage of the electrostatic repulsions between surface charges ^{[8]}. Although the setup for electrospinning is extremely simple, the spinning mechanism is rather complicated. When a high voltage (usually in the range of 1 to 30 kV) is applied, the pendent drop of polymer solution at the nozzle of the spinneret will become highly electrified and the induced charges are evenly distributed over the surface. As a result, the drop will experience two major types of electrostatic forces: the electrostatic repulsion between the surface charges; and the Coulombic force exerted by the external electric field. Under the action of these electrostatic interactions, the liquid drop will be distorted into a conical object commonly known as the Taylor cone ^{[3,9]}. Once the strength of electric field has surpassed a threshold value, the electrostatic forces can overcame the surface tension of the polymer solution and thus force the ejection of a liquid jet from the nozzle. During the path that the electrified jet goes from the nozzle to the collector, the following process occurs: stretching and the elongation of the jet, solvent evaporation, polymer precipitation and the solidification of the jet. If the electrified jets that hit the collector are solid, the formation of nanofibers occurs and the nanofibers are finally deposited as a randomly oriented non-woven mat^{[3]}.

Nanofibers from electrospinning can be produced by using melted polymers or a solution of polymers dissolved in solvents. Solvent electrospinning is preferable because fibers with lower diameters are best made by this technique due to the contribution of the solvent evaporation during nanofiber generation and thereby controlled solidification of the forming nanofibers. Also control of electrospinnability characteristics such as viscosity and surface tension of the polymer solution is easier in case of solvent electrospinning. On the contrary, in case of melt electrospinning it is difficult to control the electrospinning characteristics of melted polymer and also the polymer consolidation due to the cooling off of the melted polymer. Several publications and patents can be found on electrospinning of nanofibers such as US 6746517B2, EP 1326697 B1, US7318853B2, US 7270693B2, US 7179317B2, US 7090715B2, US 6924028B2, US 6875256B2, US 6743273B2, US7008465B2, US 6746517B2, EP 1326697 B1, US 6673136B2, EP 1317317 B1, US7270692B2, EP1317317B1.

Though almost all polymers can be theoretically electrospun with needed modifications for electrospinnable characteristics, only few polymers are being used industrially such as Nylon, Polyester, Polyacrylonytrile, Polyvinyl alcohol, Polyurethane, Polylactic acid, etc. Conventionally electrospinning of nanofiber uses dominantly polymer solution in organic solvents such as Formic Acid, Tetrahydrofuran (THF), DimethylFormamide (DMF), Acetone and alcoholic solvents for producing nanofibers.

For electrospinning, solvents with low toxicity are preferable to avoid or to minimize exposures to hazardous chemical products, to decrease the risks related to health, safety & environmental impact generating from the gaseous emissions of such processes and products during material handling, processing and during end use applications. Moreover, noncombustible solvents are preferred to avoid the risk of fire especially in electrospinning process where high electrical charges are involved that may lead to electrostatic explosion hazards. Because of the reported reasons, the interest to use water based solutions for electrospinning process is becoming important and several scientific articles have been published related to this field ^{[10-17]}. Another advantage of water based solution is lower cost as compared to other solvents.

Regarding the polymers that can be applied to the electrospinning process, -theoretically-all the polymers that can be melted or dissolved can be used to form nanofibers; however, depending on the final application of the product, the chemical and physical characteristics of polymers are matter of concerns for their final application.

When water soluble polymers are used for electrospinning, the problem is that thus produced nanofibers swell or are soluble in humidity conditions and/or in water. This can be overcome by crosslinking the polymer that becomes part of the nanofiber structure thereby it could be possible to modify the chemical and physical properties of a polymer nanofiber. Crosslinking is a well known reaction where crosslinking reagents reacts and forms covalent bonds between the polymer chains to improve -for example- the resistance to heat, to mechanical degradation and to solvents. One of such example is the water based systems using polymers such as Poly Vinyl Alcohol, and crosslinking agents documented in US2004060269A1.

Further US 7270693B2 discloses polymer blends or polymers plus crosslinking agents that are able to improve the nanofibers performances of resistance to temperature, water and humidity. US 7270693B2 also discloses a crosslinking reaction of polyvynilalcohol by using crosslinking agents comprising polyacrylic acid, urea formaldehyde, melamine formaldehyde, phenol formaldehyde, or mixtures thereof.

Due to the relatively low degree of crosslinking that could be obtained with the above refered chemistries, especially using the water soluble polymers, these nanofibers may have relatively limited industrial applications especially in filtration and separation. Such nanofibers with a low degree of crosslinking undergo swelling phenomenon in water &/or humid environment compared to the one produced by solvent electrospinning; this behavious of the nanofibers leads to the reduction of the flow through the filter systems and deformation of the fibrous structure and morphology. Also such fibers will have the limited resistance to temperature; this was also evident from one of the claims of above mentioned references where in it is reported that the resistance to temperature is 140°F or 60°C.

The disclosed invention is concerned with the development of water based polymer solutions for nanofibers production with improved properties of nanofibers by improving the degree of crosslinking or the crosslinkability of the polymers in the state of nanofibers.

We have found that it is possible to improve the thermal properties of nanofibers by playing with intermolecular ionic interaction between the polymer chains that form the constituent part of nanofibers. In particular, it has been observed that the nanofibers obtained by electrospinning of solution containing two polymers or mixture of a polymer and an additive with one having acid and other with basic functionalities, show a strong improvement regarding the thermal and mechanical stability. This improvement was believed to be due to the strong ionic interaction that occurs between the acid and basic functionalities as detailed in Example 7.

It has been also observed that the only ionic interaction does not significantly improve the resistance of nanofibers against solvents; in particular, resistance against water. This behavior is due to the fact that the ionic functionalities are highly hydrophilic and are easily hydrolysable.

With the aim to produce nanofibers from water soluble polymer systems with an ionic behavior and also insoluble in water, blends of ionic polymers which are also able to react each other to form highly crosslinked nanofibers have been developed.

We have found that nanofibers produced from water soluble polymers with carboxylic acid functionalities (acid) in blend with additives or polymers with primary or secondary (or both) amino functionalities (basic) are highly reactive when they are heat treated in the state of nanofibers.

It has been demonstrated by infrared spectroscopy that the thermal treatment of nanofibers containing the above reported functionalities produce amide linkages between the polymer chains by aminolysis reaction. More in details, it has been observed that polymers with carboxylic acid functionalities with a high tendency to form anhydride functionalities by heat treatment are much more reactive for the aminolysis reaction. By infrared spectroscopy analysis on polycarboxylic acids nanofibers thermally treated at temperatures higher than 140°C, the formation of remarkable signals of anhydride functionalities has been observed. The anhydride functionality is formed by reaction of two carboxylic acid functionalities; a molecule of water is produced as by-product of the reaction. Thus formed aliphatic anhydrides are not stable at ambient temperature and humidity and they can react with water to form again carboxylic acid functionalities. We have observed that, when nanofibers produced from polymer blend containing polycarboxylic acid and primary or secondary amino functionalities is undergone to a heat treatment, carboxylic functionalities of the blend can form anhydride functionalities and the aminolysis reaction can occur from the nucleophilic attack of the added amine on the anhydride moiety. The aminolysis reaction in nanofibers has been demonstrated by measuring the anhydride peak loss with the increase of the amine relative concentration in the polymer blend. Regarding the reactivity of amines for the aminolysis reaction, primary amines are more reactive than secondary amines; tertiary and quaternary amines can not react due to the absence of a replaceable hydrogen atom.

According to a first aspect, the invention concerns a non woven web containing water insoluble nanofibers and/or microfibers obtained by an electrospinning process using a water based solution containing at least two components; a first component having carboxylic and/or anhydride functionalities and a second component having a primary and/or secondary amino functionalities, the web being cured upon a heat treatment. Polymer material that can be utilized in the polymeric compositions of this invention include polyampholytes with carboxylic acid and primary or secondary (or both) amino functionalities or a blend of two components with the characteristics reported below.

The first component of the blend is in general a polymer having carboxylic acid functionalities (polycarboxylic acids) and/or anhydride functionalities. Preferred polymers are polyacrylic acid, poly maleic acid, poly methacrylic acid, poly crotonic acid, poly glutaminic acid, poly aspartic acid, their anhydride form, including copolymers containing said acids or anhydrides or any building monomers that form the reported preferred polymers. Are included in the preferred polymers for this invention all the polymers that have been modified by a chemical reaction with the aim to introduce carboxylic acid and/or anhydride functionalities on a supporting polymer chain.

The second component of the polymer blend is a molecule having in general more than one primary or secondary amino functionalities in its chemical structure. Preferred polymers or molecules are: polyallylamine, polyethylenimine, polyvinylamine or polyvinylformamide (at different degree of hydrolysis), polylysine, chitosan, polyamidoamine, including copolymers containing said polymers or molecules or any building monomers that forms the reported polymers or in general all the polymers that have been modified by a chemical reaction with the aim to introduce primary and/or secondary amino functionalities on a supporting polymer chain.

We observed that a relatively short curing time of the nanofibers obtained by the reported formulations is enough to obtain high crosslinked products; actually, the formation of amide functionalities is observable after few seconds of curing. We believe that, due to the fact that anhydride formation and the aminolysis reaction produce water as byproduct and the rate of reaction depends also on how fast the water gets evaporated from the polymer mass. At a time this reaction gives rise to equilibrium with water as a byproduct of the reaction. Advantageously the morphology of nanofibers has a significant effect on increasing the reaction rate and the conversion yield, especially with high surface area to volume ratio of nanofiber structure, the humidity and the water produced by the reaction of aminolysis can easily and quickly diffuse out from the bulk to the surface of nanofibers and thereby evaporated. According to the Le Châtelier's principle *"if a dynamic equilibrium is disturbed by changing the conditions, the position of equilibrium moves to counteract the change"* the removal of water by evaporation in this case forces the aminolysis reaction to highly conversion in amide product.

According to a preferred embodiment, the (co)polymer having carboxyl functionalities are polyacrylic acid (PAA), polymaleic acid and the (co)polymer having amino functionalities are polyethylenimine (PEI), polyvinylamine, polyallylamine.

Generally, the ratio of first component having carboxylic acid or anhydride functionalities and second component having amino functionalities is between 0.5/99.5 and 99.5/0.5, advantageously between 10/90 and 90/10 depending on the components being used and their molecular weight.

The thermal treatment needed for the crosslinking reaction of nanofibers is conducted at a temperature of at least 140°C, advantageously between 150°C and 180°C Practically, nanofibers and/or microfibers are thermally treated between 160°C and 170°C. The time for thermal treatment depends on the desired degree of crosslinking and usually between 5 seconds to 15 minutes.

According to another characteristic, the diameter of nanofibers is between 10 nm and 800 nm.

The invention also concerns a process for manufacturing the above described non woven web, which consists in:
- preparing an aqueous polymeric solution containing at least the first component and the second component,
- electrospinning the aqueous polymer solution
- collecting the web of nanofibers and/or microfibers which is then formed on the substrate,
- crosslinking nanofibers and/or microfibers by thermal treatment at a temperature of advantageously at least 140°C.

Further, concerning the first step of the above process, it is well known that one of the necessary conditions to obtain high quality nanofibers is the achievement of a clear polymeric solution to subject to the electrospinning process. If a homogeneous and clear solution is not obtained, during the electrospinning process, the fluid jet can break and micro or macroparticles are formed instead of nanofibers. A clear solution enables to have a homogeneous solution of polymer and enables to have a suitable entanglement among the polymer chains, which is one of the necessary conditions to obtain nanofibers. A clear solution of two or more polymers lets the formation of one phase only and if the polymers are miscible the components of the resulting nanofibers in solid state formed by such polymer blends are also perfectly mixed.

It has been observed that when a polymer with acid functionalities and another polymer with basic functionalities are mixed in a protic solvent, the formation of a cloudy solution or the precipitation of the polymers can occur. This behavior is due to the interaction between the charges of the two polymers. In the case of molecules that have carboxylic acid functionalities and molecules with amino functionalities, this interaction is known as "nylon salt formation" ^{[18]}. We have observed that this ionic behavior, as reported above, is an advantage regarding the solid properties of the blends but is a disadvantage regarding the electrospinninability.

Another invention of the present disclosure is concerned to avoid the formation of nylon salt and to obtain clear and electrospinnable solutions of such polymer blends by using different approaches:

One of such method disclosed here is by using an organic or inorganic acid as a co-solvent in the water based solution for electrospinning. Another approach disclosed here is by using organic or inorganic acid and base salts of the polymers reported as preferred polymers for this invention. (For example Polyallylamine-Chloride salt, Polyallylamine-Sulfate salt, etc)

As an example, formic acid is found to be highly efficient acid as co-solvent for obtaining clear and electrospinnable solutions. There exists a direct proportion between the amount of amino functionalities in the polymer blend and the minimum amount of formic acid required to obtain a clear solution. By addition of formic acid in solution, the agglomerates of solid polymer are progressively dissolved up to the formation of cloudy gels; further addition of formic acid causes the formation of clear but highly viscous solutions and with still further addition leads to the formation of clear and electrospinnable solutions. There exists a minimum quantity of formic acid required to make a clear solution depending on the components and the ratio of the blend of polymers. We believe that formic acid may be able to solvate the charged amino functionalities of the polymer solution thereby avoiding the Nylon salt formation. We also believe that the charged amine groups may interact with the small molecules of formic acid instead of directly interacting with the carboxylic acid functionalities in the solution.

Further, according to the process of the invention, the preparation of the aqueous polymeric solution containing at least the first component and the second component consists in :
- preparing a first water solution containing the first component referred to as solution 1
- preparing a second water solution containing the second component referred to as solution 2
- adding co-solvent (organic and/or inorganic acid) drop wise to the solution 1 and stirring referred to as solution 3
- adding solution 2 drop wise to solution 3, advantagously under vigorous stirring in order to eliminate cloudiness and to obtain a clear solution that can be electrospun into nanofibers and/or microfibers.

Very uniform, long and continuous nanofibers have been obtained -for example- by using a formic acid concentration in water, advantageously, between 1 and 40% v/v; the formic acid concentration depends on the polymers involved and the amount of amino functionalities used in the electrospinning recipe.

According to another embodiment, the process of the invention is **characterized in that** the second component is transferred to salts with organic or inorganic acids.

Therefore, such a process is **characterized in that** the preparation of the aqueous polymeric solution containing at least the first component and the salt of second component consists in :
- preparing a first water solution containing the first component referred to as solution 1
- preparing a second water solution containing the salt of second component referred to as solution 2
- adding solution 2 drop wise to solution 1 in order to eliminate cloudiness and to obtain a clear solution that can be electrospun in to nanofibers and/or microfibers

Thus produced nanofibers have been found to have very satisfying properties in term of heat resistance, water insolubility, resistance to humidity and hot oil resistance, additionally, they show self adhesion properties to the non woven substrates. Such properties are essential, especially in the field of applications for filtration and separation.

The properties of insolubility in water make the produced nanofibers usable in humid and liquid environments.

Nanofibers must sufficiently adhere on the substrate to resist against the delaminating effects caused by mechanical stresses during the production of the final product or during the product life-time. Hence good adhesion property of the nanofibers on the substrates becomes another very important characteristic especially for the application such as in filtration and separation. Sufficient adhesion of nanofibers on the substrate is also desirable to make them resistant against the delaminating effect caused by converting processes including rewinding, pleating, embossing, and during the product's life cycle such as against reverse pulse cleaning of the filter media.

We have found that nanofibers produced by the disclosed invention show, in general, extremely high self adhesion properties on substrates and in particular with cellulosic substrates. We believe that the ionic characteristics of the polymers of this invention play an important role in providing the nanofibers adhesion properties due to the strong interaction such as ionic bonding, hydrogen bonding and van der Waal's bonding with polar substrates. Moreover, we believe that nanofibers produced by this invention can react with substrates that have hydroxyl functionalities on their surface (for example cellulose, viscose, lyocell, Polyvinylalcohol fibers, etc). Actually, the carboxylic acid functionalities that form a part of the nanofibers, if undergone to a thermal treatment, can react with the hydroxyl functionalities of a substrate and form covalent ester linkages between nanofibers and the substrate.

As a consequence, a non woven substrate on which the web of nanofibers of the invention is applied is also a part of the invention. Such a combination can be used for the manufacturing of a filtration media for applications such as but not limited to engine air filter, oil filters, fuel filters, water filters, face masks, packaging papers for odor adsorption, etc

Generally, the invention also concerns the use of a web as disclosed before, as filtration and separation media.

Invention and its advantages are illustrated in the following examples:
Figure 1 is a collection of analysis of nanofiber webs according to the invention by Infrared Spectroscopy (IR) before and after a heat treatment.
Figure 2 is a collection of SEM pictures of nanofibers of the invention which are further submitted to a thermal treatment at different temperatures.
Figure 3 is a collection of two Differential Scanning Calorimetry analysis (DSC) of nanofibers webs produced by pure PAA and blend of PAA (95%) and PVAm (5%)
Figure 4 is a collection of SEM pictures of crosslinked nanofibers of the invention after thermal treatment at different temperatures.
Figure 5 is a collection of SEM pictures of non heat treated and heat treated nanofibers of the invention undergone to a humidity test.
Figure 6 is a collection of SEM picture of nanofibers deposited on cellulosic substrate immersed in oil at 140°C for 1000 hours.

### Example 1: Preparation of clear and electrospinnable polymer solution

Solution 1: 8 g of Polyacrylic acid (PAA); *Sokalan PA110S* 22% w/w in water
Solution 2: Polyethyleneimine (PEI); *Polymin P* 15% w/w in water
Ratio of PAA to PEI: 95;5

Experimentally, when solution 1 and 2 are mixed together do not lead the formation of clear solutions (which is an important requirement to obtain continuous nanofibers). The mixture of solution 1 and 2 leads to formation of a salt between PAA and PEI, referred to as "nylon salt formation" and leads formation of precipitates of the polymer i.e. formation of cloudy solutions. In another case, formic acid was added to the solution 1 before the mixing of solution 1 and 2. By adding formic acid at a concentration of 20% v/v to solution 1, clear solutions of polymer blends have been obtained. Thus obtained solution was stable and clear that was electrospinnable in to long, continuous and uniform nanofibers. It has been observed that the aminolysis reaction does not occur in solution; that permits the stability of the solution as a clear electrospinnable solution for a long time.

### Example 2: Effect of the amount of formic acid on the solutions electrospinnability

Blends of Polyacrylic acid (PAA) - polyallylamine (PVAm) and blends of Polyacrylic acid (PAA) - polyethyleneimine (PEI) have been produced with different amount of formic acid as a co-solvent; the tested formulations have been produced by using the starting solutions 3&4 and 5&6 reported below, the solutions 3&5 have been further diluted with quantities of water and formic acid reported in table 1 and 2.

### Example 2a: PAA - PVAm blends

Solution 3: 8 g of PAA (*Sokalan PA110S*) 35% w/
Solution 4: PVAm (*PAA-15C*) 15% w/w in water
Ratio between PAA - PVAm: 95;5, final solid content of solutions: 23% w/w

**Table 1: formulations and characteristics of PAA - PAVm blends**

| **Recipe** | **Formic acid 90% addition to solution 3 (ml)** | **Dilution water for solution 3 (ml)** | **Final conc. formic acid (% v/v)** | **Comments** |
|---|---|---|---|---|
| **A1** | 0 | 3,8 | 0 | Salt formation |
| **A2** | 0,7 | 3,1 | 5 | Clear solution -high viscosity |
| **A3** | 1 | 2,8 | 7 | Clear solution |
| **A4** | 1,9 | 1,9 | 13 | Clear solution |
| **A5** | 3,8 | 0 | 27 | Clear solution |

It can be seen from the comments in table 1 that there exists a minimum quantity of formic acid required to make a clear and electrospinnable solution of such blend of polymers; in this case it was 7% v/v. Further increment of formic acid concentration does not cause significant alteration of solutions.

### Example 2b: PAA - PEI blends

Solution 5: 7 g of PAA (*Sokalan PA110S*) 35% w/w in water
Solution 6: 1.3 g of PEI (*Polymin P)* 10% w/w in water
Ratio between PAA - PEI: 95;5, final solid content of solutions: 21 % w/w

**Table 2: formulations and characteristics of PAA - PEI blends**

| **Recipe** | **Formic acid addition to solution 5 (ml)** | **Dilution water for solution 5 (ml)** | **Final conc. Formic acid (% v/v)** | **Comments** |
|---|---|---|---|---|
| **B1** | 0 | 4 | 0 | Salt formation |
| **B2** | 0,4 | 3,6 | 3 | Gel + salt formation |
| **B3** | 0,5 | 3,5 | 3,7 | Clear solution with portions of salt |
| **B4** | 0,8 | 3,2 | 5,9 | Clear solution with portions of salt |
| **B5** | 1 | 3 | 7,4 | Clear solution but high viscosity |
| **B6** | 1,8 | 2,2 | 13,3 | Clear solution - high viscosity |
| **B7** | 2 | 2 | 15 | Clear solution |
| **B8** | 3 | 1 | 22 | Clear solution |
| **B9** | 4 | 0 | 30 | Clear solution |

It can be seen from the comments in table 2 that in this case the minimum quantity of formic acid to obtain clear and electrospinnable solution was 15 % v/v. Further increment of formic acid concentration does not cause significant alteration of solutions.

### Example 3: Correlation between the quantity of polyamine in blend and the minimum amount of formic acid required to obtain electrospinnable solutions

Further, it has been found that the minimum quantity of formic acid required to obtain clear and electrospinnable solutions depends on the quantity of polyamine in blend. As explained in example 2, if the concentration of formic acid is too low, dispersions of solid particles, gels or viscous solutions are formed. Very good nanofibers have been obtained by using solutions made from the starting solution 7 & 8 (composition reported below); solution 7 has been further diluted with different quantities of water and formic acid and different quantities of solution 8 have been used as reported in table 3. In table 3 the minimum quantities of formic acid required to form electrospinnable solution has been correlated to the amount of PEI in blend; it can be observable that by increasing the concentration of PEI increases the demand for amount of formic acid required to form a clear solution.
Solution 7: 8 g of PAA (*Sokalan PA110S*) 35% w/w in water
Solution 8: PEI (*Polymin P*) 20% w/w in water

**Table 3: formulations and correlation between the quantity of PEI and the minimum amount of formic acid required to obtain electrospinnable solutions**

| **Recipe** | **Solid PEI % in blend** | **Grams of Solution 8** | **Formic acid addition to solution 7 (ml)** | **Dilution water for solution 7 (ml)** | **Final conc. formic acid (% w/w)** |
|---|---|---|---|---|---|
| **C1** | 0,6 | 0,085 | 0,65 | 3,9 | 5 |
| **C2** | 1,25 | 0,18 | 0,9 | 3,6 | 7,5 |
| **C3** | 2,5 | 0,35 | 1,3 | 3,1 | 10 |
| **C4** | 5 | 0,7 | 1,9 | 2,1 | 15 |
| **C5** | 7,5 | 1,1 | 2,3 | 1,3 | 18 |
| **C6** | 10 | 1,4 | 2,9 | 0,4 | 22 |

### Example 4: Preparation of electrospinnable solution blends by using salts of polymers

It has been observed that blend of PAA and PVAm-HCl are able to produce electrospinnable solutions with pure water as solvent (in this case the addition of organic or inorganic acid is not required). The tested formulations have been produced by mixing different ratios of the starting solutions 9&10, solutions 9 has been further diluted with different quantities of water before the mixing of solution 9&10. The quantities of solutions used in formulations, the dilutions with water and the ratios between the two polymers have been reported in table 4.
Solution 9: PAA (*Sokalan PA110S*) 35% w/w in water
Solution 10: PVAm-HCl (*PAA-HCL-10L*) 15% w/w in water
Final solid content of solutions: 22% w/w

**Table 4: formulation to obtain electrospinnable solutions by using blends of PAA and PVAm-HCl with pure water as solvent.**

| **Recipe** | **Solution 9 quantity (g)** | **Solution 10 quantity (g)** | **Dilution water for solution 9 (ml)** | **Solid PVAm % in blend** |
|---|---|---|---|---|
| **D1** | 12 | 1,5 | 6,5 | 5 |
| **D2** | 11,3 | 2,9 | 5,8 | 10 |
| **D3** | 10 | 5,9 | 4,1 | 20 |
| **D4** | 8,8 | 8,8 | 2,4 | 30 |

### Example 5: Nanofibers production by electrospinning

| Nanofibers are produced using a water based solution containing: | |
|---|---|
| PAA (*Sokalan PA 110 S*): | 22% |
| PEI (*Polymine P*): | 1.43% (5% to PAA) |
| Solvent: | water + 7% v/v of formic acid |

| Electrospinning Trial conditions are: | |
|---|---|
| | Voltage: 31.8 kV, 8 µA |
| | Distance nozzle/collector: 32 cm |
| | Nozzles: 0.7x30 mm |
| | Air intake speed: 70% |
| | Winder speed: 0.5 m/min |
| | T: 24°C |
| | Relative humidity: 33% |

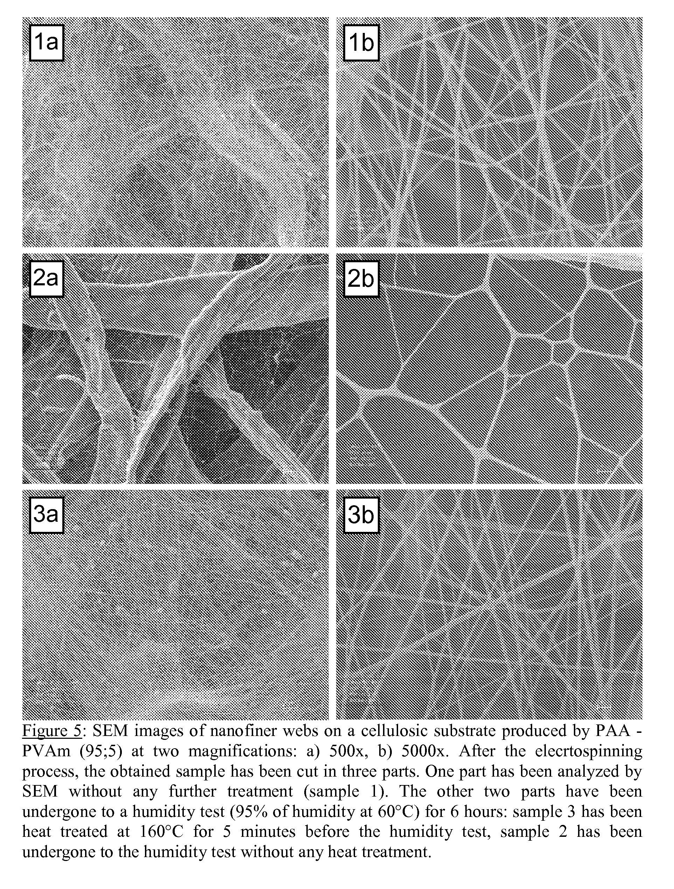

Thus obtained nanofibers are from 10 nm to 800 nm in diameter. After formation, nanofibers have been thermal treated at 160°C. SEM pictures of thus obtained nanofibers have been reported in Figure 5 after the heat treatment of nanofibers.

### Example 6: Infrared Spectroscopy Study to Confirm the Crosslinking (aminolysis) Reaction in Nanofiber

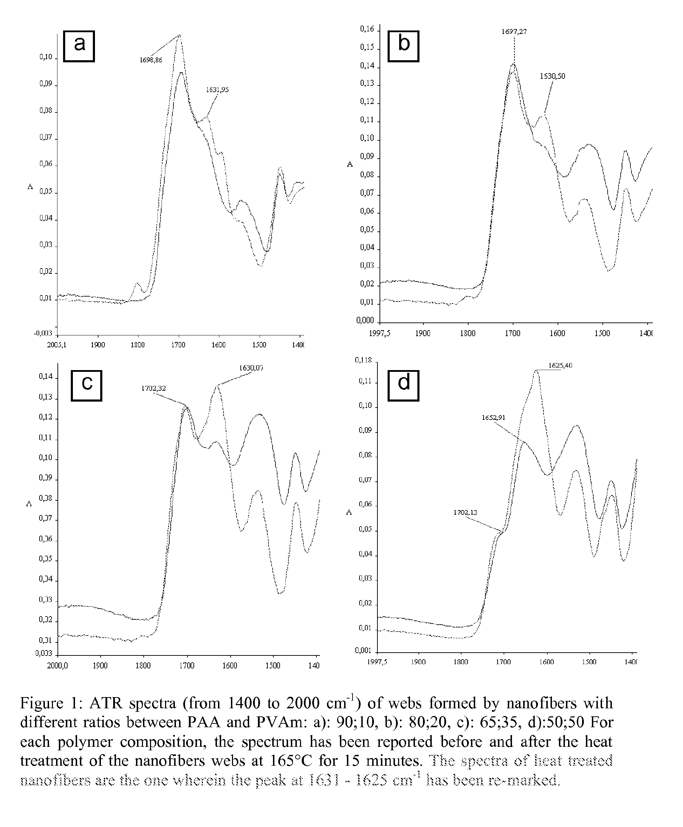

With the aim to demonstrate the formation of amide linkages (aminolysis reaction) due to the heat treatment, nanofibers webs have been analysed by Infrared Spectroscopy (IR) before and after a heat treatment at 165°C for 15 minutes. By comparing the spectra (figure 1) of nanofibers produced by PAA - PVAm blends before and after the heat treatment, is it observable that the heat treatment causes the appearance of a peak around 1630 cm⁻¹; this peak is as intense as increase the percentage of PVAm in blend. The peak at 1630 cm⁻¹ has been attributed to the amide functionalities that are formed by aminolysis (crosslinking) reaction between the carboxylic acid functionalities and the amino functionalities in the blend.

### Example 7: Resistance to Heat and Temperature

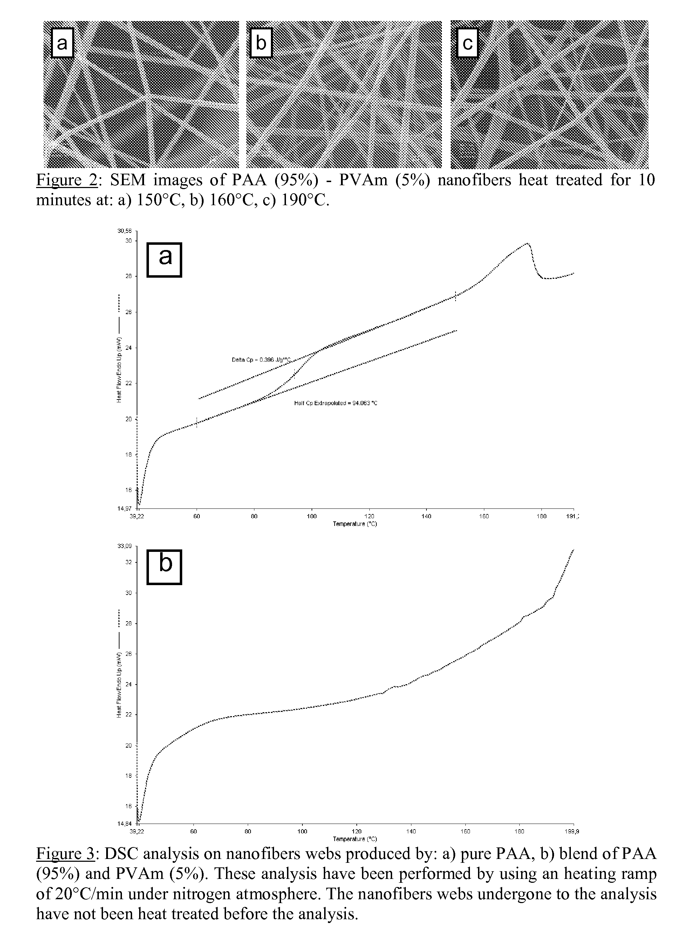

Nanofibers produced by polymer blends reported in this invention, were heat treated at different temperature for 10 minutes with the aim to verify their resistance to high temperatures and to clarify if any deformation of nanofibers structure occurs by the crosslinking (aminolysis) reaction. In figure 2 three Scanning Electron Microscopy (SEM) pictures of nanofibers produced by a blend PAA (95%) - PVAm (5%) heat treated at different temperatures have been reported as an example. As it is observable in figure 2, the nanofibers morphology is not altered by the thermal treatment and the crosslinking reaction.

To better investigate the thermal properties of nanofibers, the Differential Scanning Calorimetry analysis (DSC) of nanofibers webs produced by pure PAA and blend of PAA (95%) and PVAm (5%) have been compared in figure 3. In figure 3 it is possible to observe that the nanofibers produced by pure PAA show an evident Tg at 94°C (figure 3a); when PAA is used in blends with PVAm (figure 3b), the Tg of PAA is not observable. The most evident effect of the ionic interaction that occurs in such blends is the synergetic effect that we observed regarding the glass transition temperature (*Tg*) of a mixture of polymer with such characteristics.

In general, when blends of two polymers are completely miscible shows a specific *Tg* between the *Tg* of two pure polymers and if they are immiscible shows two different *Tg* that are the characteristic *Tg* of the two pure polymers. We have found that nanofibers produced by a blend of polymers with ionic characteristics shows a *Tg* that is higher than the *Tg* of the two pure polymers and it can completely disappear corresponding to the ratio used of the two polymers. The *Tg* shift to higher temperature can be considered a relevant improvement for the possible final application of the nanofiber web. When nanofiber is exposed to temperatures higher than their *Tg,* the softening of nanofibers leads to deformation of the fibrous structure and even leading to form polymer film that is of adverse interest for such applications as filtration and separation.

Moreover, the two DSC analysis (figure 3) show a different thermal behaviour at temperatures between 140 and 190°C, we believed that this difference is due to the crosslinking (amino lysis) reaction that occur when a blend of such polymer is produced.

### Example 8: Importance of heat treatment (crosslinking reaction) on the nanofibers to develop its resistance to water

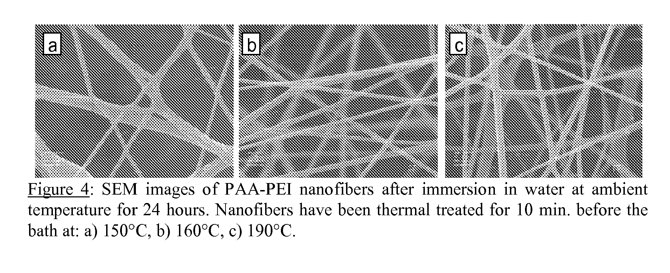

Non heat treated (no crosslinked) nanofibers obtained by the examples 1 to 5 electrospun on a cellulosic substrate were tested for the resistance to water solubility. It has been observed that when such nanofibers are immersed in water they are instantaneously solubilized. Simultaneously the samples obtained by the examples 1 to 5 have been heat treated (crosslinked) at 150, 160 and 190°C for 10 minutes and then immersed in water at ambient temperature for 24 hours. After the immersion the samples have been dried with a hair drier and analyzed by SEM and could not find any significant deformation of the nanofibers. Some SEM examples have been reported in figure 4.

As it is possible to observe in figure 4, such nanofibers are insoluble in water and this improvement in water resistance has been attributed to the crosslinking (aminolysis) reaction. More in details, it is possible to observe that nanofibers heat treated at 150°C (figure 4a) are not solubilized but -due to the swelling phenomenon- they undergo coalescence at fiber to fiber contacts. this behaviour does not occur in the case of heat treated nanofibers at higher temperatures (figure 4b-c). This may be related to the degree of crosslinking and in this case, we believe that by increasing the thermal treatment temperature, the degree of crosslinking increase and consequently increase the stability of nanofiber structures and morphology in water.

### Example 9: Resistance to Humidity Test

Nanofibers produced from the electrospinnable solutions obtained by above examples 1 to 5 were tested for resistance to humidity at 95% at 60°C for 6 hours. The nanofibers that have not been undergone to the heat treatment (polymer not crosslinked) were soluble and swelled after the exposition to humidity. The nanofibers that have been heat treated (polymer crosslinked) at temperatures higher than 140°C remained unchanged after the humidity test. It has been observed that the heat treatment of the nanofibers becomes an important part of the process and it leads the production of nanofibers that are highly resistant to humidity. The SEM pictures reported in figure 5 show the effect of the heat treatment on the nanofibers resistance against humidity. When the nanofibers are not heat treated and undergone to high humidity, they undergo coalescence at fiber to fiber contacts and/or are dissolved (figure 5[2a,b]); this behaviour does not occur in the case of heat treated nanofibers (figure 5 [3a,b]).

### Example 10: Resistance of Nanofibers to Hot Oil

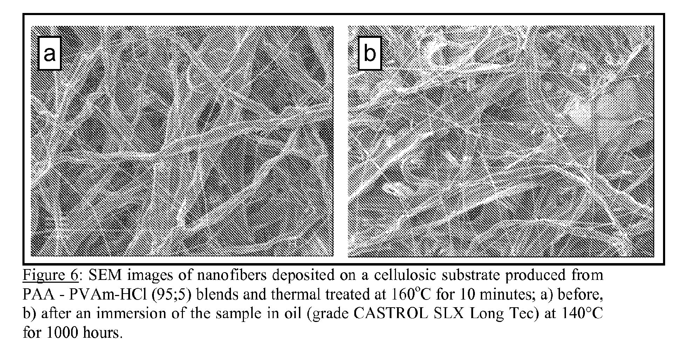

With the aim to investigate the resistance of nanofibers to hot oil, samples of nanofibers deposited on cellulosic substrate produced from PAA - PVAm-HCl (95;5) blends and thermal treated at 160°C for 10 minutes were immersed in oil (grade CASTROL SLX Long Tec) at 140°C for 1000 hours. In figure 6 two SEM images of a sample before and after the hot oil test have been reported as an example; as it is possible to observe, the nanofibers are not dissolved by the hot oil and we could not observe any significant deformation of the nanofiber structures and morphology.

### Example 11: Adhesion properties of Nanofibers on Cellulosic substrate

The adhesion properties of thus disclosed nanofibers have been analysed and compared with the adhesion properties of nylon nanofibers obtained from nylon polymer solution in formic acid both without additional binders and with additional binders to improve the adhesion of nylon nanofibers. The adhesion tests have been performed on nanofibers of this invention produced by a blend PAA (90%) - PEI (10%) after a heat treatment in oven at 165°C for 5 minute.

The first test to evaluate the adhesion is the following: *i*) a rolling-pin with known weight is covered by a black paper sheet, *ii*) two double-sided tape stripes were placed parallel on to black paper at a constant distance, *iii*) The rolling-pin was rolled one time with its own weight over the nanofibers sample, *iv)* the delaminated nanofibers were observed on the black paper, on the adhesive tape and on the substrate sample, v) particular attention was given to the area between two parallel tapes to observe the delaminating phenomenon. Tests showed that the nylon nanofibers layer was completely delaminated; the layer of nylon nanofibers with binder was not delaminated between the parallel tape strips; also the layer of nanofibers of this invention was not delaminated between the parallel tape strips and very linear borders were visible indicating better adhesion to the substrate than the Nylon nanofibers with adhesive.

### References

[1] One-Dimensional Nanostructures: Synthesis, Characterization, and Applications. Advanced Materials; 15; 5; 2003; 353-389; Y. Xia, P. Yang, Y. Sun, Y. Wu, B. Mayers, B. Gates, Y. Yin, F. Kim, H. Yan.
[2] Chemistry and Physics in One Dimension: Synthesis and Properties of Nanowires and Nanotubes. Accounts of Chemical Research; 32; 1999; 435. J. Hu, T. Odom, C. Lieber.
[3] Electrospinning of Nanofibers: Reinventing the Wheel?. Advanced Materials; 16; 14; 2004;1151-1170; D. Li, Y. Xia.
[4] Nanometre diameter fibres of polymer, produced by electrospinning; Nanotechnology; 7; 1996; 216; D. Reneker, I. Chun.
[5] A review on polymer nanofibers by electrospinning and their applications in nanocomposites; Composites Science and Technology; 63; 2003; 2223; Z. Huang, Y. Zhang, M. Kotaki, S. Ramakrishna
[6] Bending instability of electrically charged liquid jets of polymer solutions in electrospinning; Journal of Applied Physics; 87; 2000; 4531; D. Reneker, A. Yarin, H. Fong, S Koombhongse.
[7] Electrospinning: A whipping fluid jet generates submicron polymer fibers; Applyed Physics Letters; 78; 2001; 1149; Y. Shin, M. Hohman, M. Brenner, G. Rutledge.
[8] US 1975504; 1934**;** A. Formalas.
[9] Polymer nanofibers assembled by electrospinning; Current Opinion in Colloid & Interface Science; 8; 2003; 64; A. Frenot, I. Chronakis.
[10] Characterization of gelatin nanofibers electrospun using ethanol/formic acid/water as a solvent; Polymers for Advanced Technologies; 20; 2009, 98; Hsin-Chieh Chen, Win-Chun Jao, Ming-Chien Yang.
[11] Electrospun nanofibers from crosslinkedpoly(vinyl alcohol) and its filtration efficiency; 109; 2008; 951; Xiao-Hong Qin, Shan-Yuan Wang.
[12] Improvement of the water resistance of atactic poly(vinyl alcohol) nanowebs by a heat treatment; Journal of Applied Polymer Science; 106; 2007; 3430; Sung Jun Lee, Se Geun Lee, Hoyoung Kim, Won Seok Lyoo.
[13] Poly(vinyl alcohol)/chitosan oligosaccharide blend submicrometer fibers prepared from aqueous solutions by the electrospinning method; Journal of Applied Polymer Science; 111; 2009; 132; Hyun Woo Lee, Mohammad Rezaul Karim, Jae Hyeung Park, Han Do Ghim, Jin Hyun Choi, Ketack Kim, Yulin Deng, Jeong Hyun Yeum.
[14] Photo-Induced Solid-State Crosslinking of Electrospun Poly(vinyl alcohol) Fibers; Macromolecular Rapid Communications; 26; 2005; 1557; Jun Zeng, Haoqing Hou, Joachim H. Wendorff, Andreas Greiner.
[15] Preparation and characterization of a nanoscale poly(vinyl alcohol) fiber aggregate produced by an electrospinning method; Journal of Polymer Science Part B: Polymer Physics; 40; 2002; 1261; Bin Ding, Hak-Yong Kim, Se-Chul Lee, Chang-Lu Shao, Douk-Rae Lee, Soo-Jin Park, Gyu-Beom Kwag, Kyung-Ju Choi.
[16] Electrospinning of Collagen Nanofiber Scaffolds from Benign Solvents; Macromolecular Rapid Communications; 30; 2009; 539; Bin Dong, Olivier Arnoult, Meghan E. Smith, Gary E. Wnek.
[17] Photocrosslinked electrospun chitosan-based biocompatible nanofibers; Journal of Applied Polymer Science; 109; 2008; 3337; Yu Jin, Dongzhi Yang, Yingshan Zhou, Guiping Ma, Jun Nie.
[18] Essentials of Polymer Science and Engineering; Destech Pubns Inc, 2008; page 57; Tekijät Paul C. Painter, Michael M. Coleman

## Claims

1. A non woven web containing water insoluble nanofibers and/or micro fibers obtained by a process using a water based solution containing at least two components, a first component having carboxylic acid and/or anhydride functionalities and a second component having primary and/or secondary amino functionalities, the web being cured upon a heat treatment.

2. A web according to claim 1, **characterized in that** the first component is chosen from the group containing polyacrylic acid, poly maleic acid, poly methacrylic acid, poly crotonic acid, poly glutaminic acid, poly aspartic acid, their anhydride form, including copolymers containing said first component.

3. A web according to claim 1, **characterized in that** the second component is chosen from the group containing polyallylamine, polyethylenimine, polyvinylamine or polyvinylformamide, chitosan, polyamidoamine, including copolymers containing said second component.

4. A web according to claim 1, **characterized in that** the component having carboxyl functionalities is chosen from the group containing polyacrylic acid (PAA), polymaleic acid and the (co)polymer having amino functionalities is chosen from the group containing polyethylenimine (PEI), polyvinylamine, polyallylamine.

5. A web according to claim 1, **characterized in that** the ratio of first component and second component is between 0.5/99.5 and 99.5/0.5, advantageously between 10/90 And 90/10 depending on the component being used and their molecular weight.

6. A process for manufacturing the non woven web according to claim 1, which consists in:
- preparing an aqueous polymeric solution containing at least the first component and the second component,
- electrospinning the aqueous polymer solution
- collecting the web of nanofibers and/or microfibers which is then formed on the substrate,
- crosslinking nanofibers and/or microfibers by thermal treatment at a temperature of advantageously at least 140°C

7. A process according to claim 6, **characterized in that** the preparation of the aqueous polymeric solution containing at least the first component and the second component consists in :
- preparing a first water solution containing the first component referred to as solution 1
- preparing a second water solution containing the second component referred to as solution 2
- adding co-solvent (acid) drop wise to the solution 1 and stirring referred to as solution 3
- adding solution 2 drop wise to solution 3 in order to eliminate cloudiness and to obtain a clear solution that can be electrospun in to nanofibers and/or microfibers.

8. A process according to claim 7, **characterized in that** the co-solvent is Formic acid

9. According to claim 8, **characterized in that** Formic acid represents between 1 and 40% V/V of the aqueous solution.

10. A process according to claim 6, **characterized in that** the second component is transferred to salts with organic or inorganic acids.

11. A process according to claim 6, **characterized in that** the preparation of the aqueous polymeric solution containing at least the first component and the salt of second component consists in :
- preparing a first water solution containing the first component referred to as solution 1
- preparing a second water solution containing the salt of second component referred to as solution 2
- adding solution 2 drop wise to solution 1 in order to eliminate cloudiness and to obtain a clear solution that can be electrospun in to nanofibers and/or microfibers

12. A process according to claim 6, **characterized in that** the thermal treatment is conducted between 5 seconds to 15 minutes.

13. Use of a web according to claim 1, as filtration and separation media.
